# EUROPEAN PATENT SPECIFICATION

(11) **EP 3 188 514 B1**
(45) Date of publication and mention of the grant of the patent: **20.08.2025**
(21) Application number: 16207044.5
(22) Date of filing: 28.12.2016
(51) Int. Cl.: H04W 4/00

(54) **HOME AUTOMATION DEVICE AND SYSTEM**
HAUSAUTOMATISIERUNGSGERÄT UND -SYSTEM
DISPOSITIF ET SYSTÈME D'AUTOMATISATION DOMESTIQUE

(30) Priority: 28.12.2015 IT UB20159174
(43) Date of publication of application: 05.07.2017
(73) Proprietor: Finder S.P.A., 10040 Almese (TO) (IT)
(72) Inventor: BUTTO', Andrea, 10040 Almese (TO) (IT); LA ROTONDA, Remo, 10040 Almese (TO) (IT)
(74) Representative: Robba, Pierpaolo

(56) References cited:
- US-A1- 2006 018 303
- US-A1- 2006 095 146
- US-A1- 2007 287 450

## Description

### Technical Field

The present invention concerns a device and a system for home automation and a method of configuring the devices composing such system. More particularly, the invention concerns devices mutually connected via radio links so as to form the nodes of a mesh-type network of a home automation system, and the following description will mainly refer to such an application.

### Prior Art

In the field of home automation devices and systems, it is known to use devices connected via radio links so as to build a mesh-type network. The known home automation devices can be divided into various kinds: sensor type devices or sensors, control type devices or controls, and actuator type devices or actuators.

Sensors can be considered as automatic control devices, unlike controls that are the devices actuated by an operator.

Controls allow controlling the state of the actuators, by performing different functions such as switching on or off, timing of the actuations, etc. Examples of controls are keys, pushbuttons, thermostats or touch-screen devices.

Actuators are devices performing the function of electrically actuating the commands received from a control device. Examples are relays or dimmers.

The prior art home automation devices to be used in a mesh-type network include a wireless interface, for instance a radio-frequency or Wi-Fi interface, and a memory, for instance integrated into the device.

Yet, the devices of the kind specified above have some drawbacks. A drawback is that the operation of adding a device to the network or modifying the device configurations is not so easy as to be performed by the user, and demands intervention of a qualified installer.

Another drawback is that, in order to enable execution of such operations, a management device or a computer or the like is to be provided in the network in order to store and modify the configuration of the automation device. Documents US 2007/287450, US 2006/095146 and US 2006/018303 represent relevant prior art.

### Summary of the invention

The invention is defined by the claims.

It is an object of the present invention to provide a home automation device equipped with an NFC chip enabling setting the device through a mobile device (smartphone or tablet) equipped with an NFC connection and a dedicated application (APP).

It is another object of the invention to enable recognising the device as being part of a network, either an already existing network or a new one.

It is a further object of the invention to enable an easy, fast and safe configuration of the home automation device in the product manufacturing and test steps.

It is yet another object of the invention to provide for a sharing of the parameters of each device belonging to the network, so that the network composition can be obtained from any device.

The above and other objects are achieved by the present invention by providing home automation devices and a home automation system as claimed in the appended claims.

The claims are to be intended as being integral part of the technical teaching provided herein in respect of the invention.

### Brief Description of the Figures

Further features and advantages of the present invention will become apparent from the following detailed description, given by way of non-limiting example only, with reference to the accompanying drawings, in which:

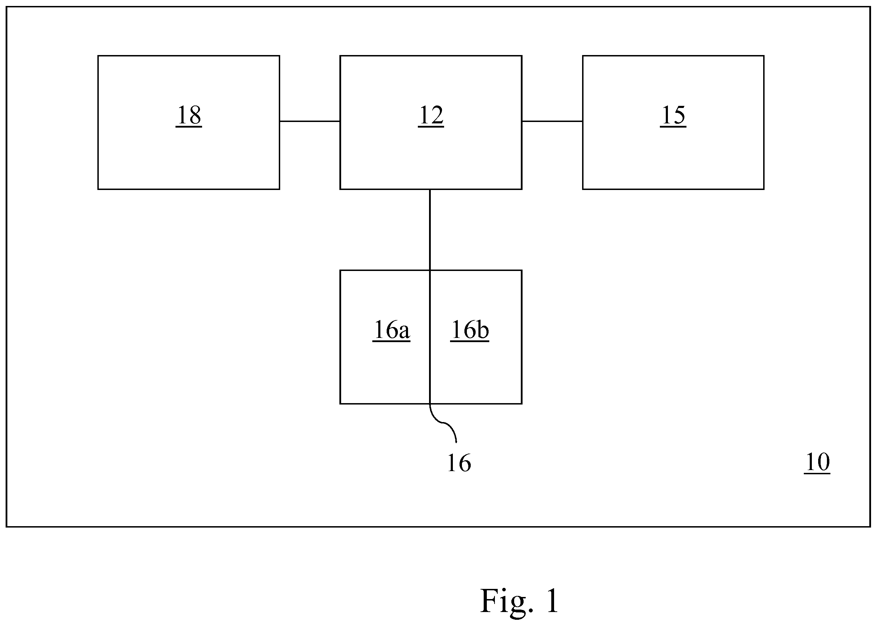

- Fig. 1 is a block diagram of an embodiment of a home automation device according to the present invention.

### Description of Preferred Embodiments

Referring to the Figures, an exemplary embodiment of a device 10 of a home automation system 100 and of a method of configuring same is shown.

Referring to Fig. 1, home automation device 10 according to the invention includes an automation module 12 associated with, preferably electrically connected to, a memory unit 15 that can be internal or external to the same automation module, a communication module 16 of the NFC (Near Field Communication) type and a wireless transceiver 18.

Automation module 12 preferably consists of a sensor, e.g. a brightness sensor, a temperature sensor or the like, or of a control, e.g. a pushbutton or a key, or of an actuator, e.g. a relay, a dimmer and the like.

Home automation device 10 is configurable either through wireless transceiver 18 or through the NFC-type communication module 16 it is equipped with, by writing one or more table(s) stored in memory unit 15. Home automation device 10 can be connected by means of wireless transceiver 18 to at least two home automation devices 10 in a mesh-type network.

A table stored in memory unit 15 (Table 1) contains data of home automation devices 10 connected in the mesh-type network, and in particular the relationships among devices 10. Hereinafter, an exemplary table is shown, which contains, for each device, the address, the addresses of the next device and the preceding device associated therewith in the mesh-type network, the addresses of the first neighbours among the network devices that are located within the radius of action of the device, as well as other static and dynamic parameters of the device.

**TABLE 1**

| Device 0 | Device 1 | Device... | Device K |
|---|---|---|---|
| Address | Address | | Address |
| Next device address | Next device address | | Next device address |
| Preceding device address | Preceding device address | | Preceding device address |
| Address of the first neighbour 0₁ | Address of the first neighbour 1₁ | | Address of the first neighbour K₁ |
| Address of the first neighbour 0₂ | Address of the first neighbour 1₂ | | Address of the first neighbour K₂ |
| Address of the first neighbour ... | Address of the first neighbour ... | | Address of the first neighbour ... |
| Address of the first neighbour 0_{X} | Address of the first neighbour 1_{y} | | Address of the first neighbour K_{z} |
| Static parameter 0₁ | Static parameter 1₁ | | Static parameter K₁ |
| Static parameter 0₂ | Static parameter 1₂ | | Static parameter K₂ |
| Static parameter... | Static parameter... | | Static parameter... |
| Static parameter 0ₙ | Static parameter 1ₚ | | Static parameter Kᵣ |
| Dynamic parameter 0₁ | Dynamic parameter 1₁ | | Dynamic parameter K₁ |
| Dynamic parameter 0₂ | Dynamic parameter 1₂ | | Dynamic parameter K₂ |
| Dynamic parameter... | Dynamic parameter... | | Dynamic parameter... |
| Dynamic parameter 0ₘ | Dynamic parameter 1_{q} | | Dynamic parameter Kₛ |

Transceiver 18 is for instance a known RF module operating at 433 MHz or 868 MHz, or a Wi-Fi module.

NFC-type communication module 16 of home automation device 10 according to the invention includes a wireless communication module 16a, which integrates an antenna or is connected thereto and includes an NFC memory buffer 16b, which can be written and/or read by an external device, e.g. a smart-phone, which is similarly provided with an NFC-type communication module.

Preferably, in order to make transmission easier, the antenna is located close, and preferably as close as possible, to the face of home automation device 10 oriented outwards when home automation device 10 is installed, so that the external device provided with an NFC-type communication module can be brought close to the antenna in order to configure home automation device 10.

Home automation system 100 according to the invention comprises at least three home automation devices 10 connected in a mesh-type network. Preferably, home automation system 100 according to the invention comprises a plurality of home automation devices 10 connected in a mesh-type network.

The table stored in memory unit 15 contains the parameters of each home automation device 10 associated with the mesh-type network. The different home automation devices 10, and more particularly automation modules 12, mutually interact according to the modalities contained in the table(s) stored in memory unit 15. The table(s) can be loaded with default data during manufacturing of home automation device 10, or through memory buffer 16b during the installation/configuration step, as it will be disclosed in detail later on.

In accordance with an exemplary embodiment of the present invention, the table stored in memory unit 15 (Table 2) contains the list of the devices connected to the network and the respective data. Such data include, besides the logical addresses as disclosed above, also sub-networks to which the devices belong (as it will be disclosed later on), the list of the devices forming the sub-networks, the revision level for each device and the number of devices forming the network. The table also contains, for each device, command lists and parameter lists, expressed as sequences or strings of command bytes and parameter bytes. Such sequences are compact and dynamic, and they are composed and decoded by each device depending on its own characteristics. More particularly, in each byte of the command and parameter byte sequences, bit #7 denotes the start of a command (if the bit is 1) or a parameter (if the bit is 0), whereas bit #0, when it is 1, indicates that a data byte is followed by a parameter byte. Bits #1 to #6 contain the information (i.e. the command or parameter to be applied).

**TABLE 2**

| Device 0 | Device 1 | Device... | Device K |
|---|---|---|---|
| Address of device 0 | Address of device 1 | | Address of device K |
| Sub-network of device 0 | Sub-network of device 1 | | Sub-network of device K |
| Revision of device 0 | Revision of device 1 | | Revision of device K |
| Number of devices (x) | Number of devices (x) | | Number of devices (x) |
| Address of neighbour 0₁ | Address of neighbour 1₁ | | Address of neighbour K₁ |
| Address of neighbour 0₂ | Address of neighbour 1₂ | | Address of neighbour K₂ |
| Address of neighbour ... | Address of neighbour ... | | Address of neighbour ... |
| Address of neighbour 0ₓ | Address of neighbour 1_{y} | | Address of neighbour K_{z} |
| Command/Parameter string (n) | Command/Parameter string (n) | | Command/Parameter string (n) |
| Byte 0 | Byte 0 | | Byte 0 |
| Byte 1 | Byte 1 | | Byte 1 |
| Byte ... | Byte ... | | Byte ... |
| Byte Z | Byte Z | | Byte Z |

In accordance with the present exemplary embodiment, possible command and parameter sequences are given hereinbelow. In the sequences, a bit numbering of the "LSB 0" type, i.e. a numbering in which bit #0 is the least significant bit, has been adopted by way of example only.
- Sequence 1: 1ccc.ccc1 + 0ppp.ppp0
   Such a sequence indicates that the first byte (1ccc.ccc1) is a command (since bit #7 is 1) and that it is followed by a parameter byte (since bit #0 is 1).
- Sequence 2: 1ccc.ccc1 + 0ppp.ppp1 + 0ddd.ddd0
   Such a sequence indicates that the first byte (1ccc.ccc1) is a command byte and is followed by a parameter byte, and that the first parameter byte (0ppp.ppp1) is followed by another parameter byte (since bit #0 is 1).
- Sequence 3: 1ccc.ccc1 + 0ppp.ppp1 + 0ddd.ddd0 + 1kkk.kkk1 + 0hhh.hhh1 + 0sss.sss0 Such a sequence has a first portion that is equal to sequence 2, and continues with a further command byte (1kkk.kkk1) followed by two further parameter bytes (0hhh.hhh1 + 0sss.sss0).

Advantageously, the bytes composing the sequences are linked together in a simple, flexible and dynamic manner. Moreover, since information is compact and is transmitted in dynamic manner, the band it occupies is reduced and the performance of home automation system 100 is better. This is particularly advantageous since home automation devices 10 generally are not provided with a high computational capability.

The operation of home automation device 10 and home automation system 100 according to the invention is as follows.

During the manufacturing step of a home automation device 10 according to the invention, starting parameters, both functional parameters (e.g. concerning the operation typology: on/off relays, step-by-step relays, etc.) and operational ones (e.g., timing duration), are loaded into the table(s) stored in memory unit 15, thereby enabling devices 10 to connect themselves with one another thereby forming a mesh-type network as soon as they are switched on, without need to program them and without intervention of an operator. In the same manner, a home automation device 10 according to the invention, thanks to the starting parameters loaded into the table(s), can connect itself to an already existing mesh-type network of a home automation system 100 consisting of multiple devices 10.

Moreover, also commands are loaded into the table(s) stored in memory unit 15 during the manufacturing step of a home automation device 10 according to the invention.

Parameters and commands are loaded as sequences or strings of dynamically connected command bytes and parameter bytes. More particularly, as disclosed above, a first bit (e.g. bit #7) in each byte is arranged to distinguish command bytes from parameter bytes and a second bit (e.g. bit #0) in each said byte is arranged to indicate whether said bytes are followed, in the respective sequences, by a parameter byte.

Moreover, in a home automation device 10 according to the invention, the data (including parameters and commands) contained in the table(s) stored in the memory unit 15 can be modified at the user's level, without the need for the intervention of a skilled operator, for instance by using a device with an NFC module, such as a smartphone, a computer or the like. More particularly, the NFC module contained in a device external to home automation device 10, e.g. contained in a smartphone, is put in communication with wireless communication module 16a of home automation device 10 by means of an application "APP" installed on the smartphone. The "APP" writes data into specific sectors of NFC memory buffers 16b, e.g. that a device is tagged for being connected with one or more devices belonging to the mesh-type network of home automation system 100, or that a key is associated with a plurality of switches (date, hour, geographical location, programmed on or off times, timing duration, dimmed entity...).

When the data contained in the table(s) stored in memory unit 15 of a home automation device 10 according to the invention have been modified, also the tables stored in memory units 15 of the other home automation devices 10 connected in the mesh-type network of home automation system 100 are automatically updated. Through the APP, the tables can also be made available at a remote location, for instance to the person in charge of the system management.

Automation module 12 periodically checks whether a data update command, activated by the application in the smartphone, is present in NFC memory buffer 16b. Automation module 12, when it finds the data update command, interprets it and updates internal memory 15, adjusts the operation modality of home automation device 10 among the ones provided for (daily or weekly, manual or automatic, etc.) and compiles a return buffer provided in NFC-type communication module 16 for the APP, containing information about the operations carried out (programming, localisation, recording, copying, reading etc.), in order the smartphone can read such information.

Each parameter and/or command having been modified compiles the return buffer in NFC-type communication module 16 for the APP.

Preferably, the device external to home automation device 10, e.g. the smartphone, transfers the data into NFC memory buffer 16b without need for being supplied with further power, hence also when the home automation device is not connected to the electric mains or when it has no battery or its battery is flat.

The operating manner of home automation device 10 and home automation system 100 according to the invention provides that home automation devices 10 are preset at the factory for associating with one another and establishing a specific network. When being switched on, each device 10 emits a signal, which is read and recognised by the other devices 10, which therefore become associated in the specific network. Each device is therefore capable of recognising a specific network and of configuring itself in that network: the user only has to switch on the device and to ensure that the device is within the radio range of at least another device in the same network.

Within the specific network, sub-networks can be created, which exploit the facilities of the main network but have different associations and characteristics.

For instance, by means of an APP (by using the NFC of each device), in a network consisting of all devices in a school, sub-networks including the whole of the first classes, the second classes and the third classes, respectively, can be established. In this way, the devices concerning the third classes form a network, but they do not need to be all within their respective ranges.

Advantageously, home automation device 10 according to the present invention allows getting access to the network composition without need for paper documents.

Another advantage of home automation device 10 according to the present invention is that it allows configuring only the desired devices in the networks, thereby preventing insertion, by mistake, also of devices belonging to adjacent networks.

A further advantage of home automation device 10 according to the present invention is as follows: thanks to the little power the NFC chip is capable of receiving from the smartphone transmission, it can transfer the data without the need for being supplied with further power, hence, potentially, even when the home automation device is not connected to the electric mains or when it has no battery or its battery is flat.

Yet another advantage of home automation device 10 according to the present invention is that it exploits existing facilities (other networks) to widen the coverage of its own network, by using the other networks as routers/repeaters,

Still another advantage of home automation device 10 according to the present invention is that it makes available data for a targeted preventive maintenance.

Of course, the embodiments and the construction details can be widely changed with respect to what has been described and shown by way of non-limiting example only, without thereby departing from the scope of the present invention as defined in the appended claims.

## Claims

1. Home automation system comprising at least three home automation devices (10) connected in a mesh-type network, each of said home automation devices (10) comprising an automation module (12) associated with a memory unit (15), with an NFC-type communication module (16) and with a wireless transceiver (18), each of said home automation devices (10) being configurable either through the wireless transceiver (18) or through the NFC-type communication module (16) with which it is provided, by writing one or more table(s) stored in the memory unit (15), wherein said one or more tables stored in the memory unit (15) of each of said home automation devices (10) contains a list of the other home automation devices (10) of the home automation system connected in the mesh-type network and their respective data, said data comprising the relationships between each of said home automation devices (10), and wherein said one or more tables stored in the memory unit (15) of each of said home automation devices (10) contain commands and parameters loaded as sequences of compact and dynamically connected command bytes and parameter bytes, wherein a first bit in each said byte is arranged to distinguish command bytes from parameter bytes, and in that a second bit in each said byte is arranged to indicate whether said bytes are followed, in the respective sequences, by a parameter byte.

2. Home automation system according to claim 1, wherein the automation module (12) of each of said home automation devices (10) consists of a sensor or a control or an actuator.

3. Home automation system according to any of the preceding claims, wherein the transceiver (18) of each of said home automation devices (10) is an RF module or a Wi-Fi module.

4. Home automation system according to any of the preceding claims, wherein the NFC-type communication module (16) of each of said home automation devices (10) comprises a wireless communication module (16a) which integrates an antenna or is connected thereto and comprises an NFC memory buffer (16b), which can be read and/or written by an external device which is similarly provided with an NFC-type communication module.

5. Home automation system according to claim 4, wherein the antenna of the wireless communication module (16a) of each of said home automation devices (10) is located close to the outwardly oriented face of the home automation device (10), when the home automation device (10) is installed, so that the external device provided with an NFC-type communication module can be brought close to the antenna in order to configure the home automation device (10).

6. Home automation system according to claim 4 or 5, wherein the automation module (12) of each of said home automation devices (10) is configured to periodically check whether a data update command, activated by said external device, is present in NFC memory buffer (16b) and, when a data update command is present, to interpret it, to update the memory unit (15), to adjust the operation modality of the home automation device (10) among the ones provided for and to compile a return buffer provided in the NFC-type communication module (16), containing information about the operations carried out, in order said external device can read such information.

7. Method for configuring home automation devices (10) of a home automation system according to any of claims 1 to 6, comprising the steps of:
- during manufacturing of a home automation device (10) of the home automation system, uploading starting parameters, both functional and operational ones, and commands into the table(s) stored in the memory unit (15), said parameters and commands comprising sequences of dynamically connected command bytes and parameter bytes, wherein a first bit in each said byte is arranged to distinguish command bytes from parameter bytes, and in that a second bit in each said byte is arranged to indicate whether said bytes are followed, in the respective sequences, by a parameter byte;
- activating by an user at least three home automation devices (10) of the home automation system;
- establishing a mesh-type network by the devices (10) that become interconnected as soon as they are activated, without the need to program them and without intervention by an operator, by interacting according to the modalities contained in the table(s),
wherein said one or more tables stored in the memory unit (15) of each of said home automation devices (10) contains a list of all home automation devices (10) of the home automation system connected in the mesh-type network and their respective data, said data comprising the relationships between each of said home automation devices (10).

8. Method according to claim 7, in which the step of:
- establishing a mesh-type network with the devices (10) that become interconnected as soon as they are activated, without the need to program them and without intervention by an operator,
is replaced by the step of:
- connecting a home automation device (10), by means of the starting parameters uploaded in the table(s), to an already existing mesh-type network of a home automation system according to any of claims 1 to 6.

9. Method according to claim 7 or 8, further comprising the step of:
- modifying at the user's level the data contained in the table(s) stored in the memory unit (15) of a home automation device (10) of the home automation system according to any of claims 1 to 6, without the need for the intervention of a skilled operator, by using a device with an NFC module.

10. Method according to claim 9, further comprising the step of verifying and reconstructing the tables stored in the memory unit (15) of the other home automation devices (10) connected to the mesh-type network of the home automation system, when the data contained in the table(s) stored in the memory unit (15) of a home automation device (10) have been modified.

11. Method according to claim 9 or 10, wherein the NFC module contained in a device external to the home automation device (10) is put in communication with the wireless communication module (16a) of the home automation device (10) by means of an application "APP" installed on a smartphone.

12. Method according to any of claims 9 to 11, comprising the step of creating a sub-network comprising part of the devices (10) associated in the mesh-type network, wherein the devices (10) associated in said sub-network have different associations and characteristics with respect to the other devices (10) that are associated in the mesh-type network but are not associated in said sub-network.

## Patentansprüche

1. Hausautomatisierungssystem mit wenigstens drei Hausautomatisierungsgeräten (10), die in einem vermaschten Netz verbunden sind, wobei jedes der Hausautomatisierungsgeräte (10) ein Automatisierungsmodul (12) aufweist, dem eine Speichereinheit (15), ein NFC-artiges Kommunikationsmodul (16) und ein drahtloser Transceiver (18) zugeordnet ist, wobei jedes der Hausautomatisierungsgeräte (10) durch den drahtlosen Transceiver (18) oder durch das NFC-artige Kommunikationsmodul (16), mit dem es ausgestattet ist, konfigurierbar ist, indem in eine oder mehrere in der Speichereinheit (15) gespeicherte Tabelle(n) geschrieben wird, wobei die eine oder mehreren in der Speichereinheit (15) jedes der Hausautomatisierungsgeräte (10) gespeicherten Tabelle(n) eine Liste der anderen in dem vermaschten Netz verbunden Hausautomatisierungsgeräte (10) des Hausautomatisierungssystems und deren entsprechende Daten enthält, wobei diese Daten die Beziehungen zwischen jedem der Hausautomatisierungsgeräte (10) enthalten, und wobei die eine oder mehreren in der Speichereinheit (15) gespeicherten Tabellen jedes der Hausautomatisierungsgeräte (10) Befehle und Parameter enthält, die als Sequenzen von kompakten und dynamisch verbundenen Befehlsbytes und Parameterbytes geladen sind, wobei ein erstes Bit in jedem Byte vorgesehen ist, um Befehlsbytes von Parameterbytes zu unterscheiden, und ein zweites Bit in jedem Byte angeordnet ist, um anzugeben, ob diesem Bytes in der entsprechenden Sequenz ein Parameterbyte folgt.

2. Hausautomatisierungssystem nach Anspruch 1, wobei das Automatisierungsmodul (12) jedes der Hausautomatisierungsgeräte (10) einen Sensor oder eine Steuerung oder einen Aktor aufweist.

3. Hausautomatisierungssystem nach einem der vorstehenden Ansprüche, wobei der Transceiver (18) von jedem der Hausautomatisierungsgeräte (10) ein RF-Modul oder ein Wi-Fi Modul ist.

4. Hausautomatisierungssystem nach einem der vorstehenden Ansprüche, wobei das NFC-artige Kommunikationsmodul (16) jedes der Hausautomatisierungsgeräte (10) ein drahtloses Kommunikationsmodul (16a) enthält, das eine Antenne aufweist oder an eine Antenne angeschlossen ist und einen NFC-Pufferspeicher (16b) enthält, der mit einem externen Gerät ausgelesen und/oder beschrieben werden kann, das in ähnlicher Weise mit einem NFC-artigen Kommunikationsmodul versehen ist.

5. Hausautomatisierungssystem nach Anspruch 4, wobei die Antenne des drahtlosen Kommunikationsmoduls (16a) jedes Hausautomatisierungsgeräts (10) nahe an einer nach außen gerichteten Fläche der Hausautomatisierungsvorrichtung (10) angeordnet ist, wenn das Hausautomatisierungsgerät (10) installiert ist, so dass die externe Vorrichtung, die mit einem NFC-artigen Kommunikationsmodul versehen ist, zum Konfigurieren der Hausautomatisierungsvorrichtung (10) nahe an die Antenne gebracht werden kann.

6. Hausautomatisierungssystem nach Anspruch 4 oder 5, wobei das Automatisierungsmodul (12) jedes Hausautomatisierungsgeräts (10) dafür ausgelegt ist, periodisch zu prüfen, ob ein Datenauffrischungsbefehl, der von dem externen Gerät aktiviert wurde, in dem NFC-Pufferspeicher (16b) vorhanden ist, und, wenn ein Datenauffrischungsbefehl vorhanden ist, diesen zu interpretieren, die Speichereinheit (15) aufzufrischen, die Betriebsmodalität des Hausautomatisierungsgeräts (10) unter den vorhandenen anzupassen und einen in dem NFC-artigen Kommunikationsmodul (16) vorgesehen Ausgabespeicher zu kompilieren, der Informationen über die durchgeführten Operationen enthält, damit die externe Vorrichtung diese Informationen lesen kann.

7. Verfahren zum Konfigurieren von Hausautomatisierungsgeräten (10) eines Hausautomatisierungssystems nach einem der Ansprüche 1 bis 6 mit den folgenden Schritten:
- während der Herstellung eines Hausautomatisierungsgeräts (10) des Hausautomatisierungssystems, Hochladen von Startparametern, sowohl funktionalen als auch betrieblichen, und Befehlen in die in der Speichereinheit (15) gespeicherte Tabelle(n), wobei die Parameter und Befehle Sequenzen von dynamisch verbundenen Befehlsbytes und Parameterbytes enthalten, wobei ein erstes Bit in jedem dieser Bytes angeordnet ist, um Befehlsbytes von Parameterbytes zu unterscheiden, und ein zweites Bit in jedem dieser Bytes angeordnet ist, um anzugeben, ob diesen Bytes in den entsprechenden Sequenzen ein Parameterbyte folgt,
- Aktivieren von wenigstens drei Hausautomatisierungsgeräten (10) des Hausautomatisierungssystems durch einen Benutzer,
- Etablieren eines vermaschten Netzes durch die Geräte (10), die sich verbinden, sobald sie aktiviert sind, ohne die Notwendigkeit sie zu programmieren und ohne Intervention eines Betreibers, durch interagieren gemäß den in der Tabelle(n) enthaltenen Modalitäten,
wobei die in der Speichereinheit (15) des Hausautomatisierungsgeräts (10) gespeicherten eine oder mehreren Tabelle(n) eine Liste von allen in dem vermaschten Netzwerk verbunden Hausautomatisierungsgeräten (10) des Hausautomatisierungssystems sind, und deren entsprechende Daten enthält, wobei die Daten die Beziehungen zwischen jedem der Hausautomatisierungsgeräte (10) enthalten.

8. Verfahren nach Anspruch 7, in welchem der Schritt des
- Etablierens eines vermaschten Netzwerks mit den Geräten (10), die sich verbinden, sobald sie aktiviert sind, ohne die Notwendigkeit, diese zu programmieren und ohne Intervention eines Bedieners,
ersetzt wird durch den Schritt des
- Verbindens eines Hausautomatisierungsgeräts (10) mittels der in die Tabelle(n) hochgeladenen Startparameter an ein bereits existierendes vermaschtes Netzwerk eines Hausautomatisierungssystems nach einem der Ansprüche 1 bis 6.

9. Verfahren nach Anspruch 7 oder 8, zusätzlich mit dem Schritt des:
- Modifizierens der in der Tabelle(n) in der Speichereinheit (15) des Hausautomatisierungsgeräts (10) des Hausautomatisierungssystems gespeicherten Daten auf der Benutzerebene nach einem der Ansprüche 1 bis 6 ohne die Notwendigkeit der Intervention einer Fachkraft durch Verwendung eines Geräts mit einem NFC-Modul.

10. Verfahren nach Anspruch 9, zusätzlich mit dem Schritt des Verifizierens und Rekonstruierens der in der Speichereinheit (15) der anderen an das vermaschte Netzwerk des Hausautomatisierungssystems angeschlossen Hausautomatisierungsgeräte (10) gespeicherten Tabelle(n), wenn die Daten, die in der in der Speichereinheit (15) des Hausautomatisierungssystems (10) gespeicherten Tabelle(n) enthalten sind, modifiziert wurden.

11. Verfahren nach Anspruch 9 oder 10, wobei das in einem Gerät, das in Bezug auf das Hausautomatisierungsgerät (10) extern ist, enthaltene NFC-Modul mittels eines auf einem Smartphone installierten Anwendungsprogramms "APP" mit dem drahtlosen Kommunikationsmodul (16a) des Hausautomatisierungsgeräts (10) in Kommunikation gebracht wird.

12. Verfahren nach einem der Ansprüche 9 bis 11 mit dem Schritt des Erzeugens eines Unternetzwerks, das einen Teil der dem vermaschten Netzwerk zugeordneten Geräte enthält, wobei die Geräte (10), die dem Unternetzwerk zugeordnet sind, unterschiedliche Zuordnungen und Merkmale in Bezug auf die anderen Geräte (10) haben, die dem vermaschten Netzwerk zugeordnet sind, aber nicht dem Unternetzwerk zugeordnet sind.

## Revendications

1. - Système d'automatisation domestique comprenant au moins trois dispositifs d'automatisation domestique (10) connectés en un réseau de type maillé, chacun desdits dispositifs d'automatisation domestique (10) comprenant un module d'automatisation (12) associé à une unité de mémoire (15), à un module de communication de type NFC (16) et à un émetteur-récepteur sans fil (18), chacun desdits dispositifs d'automatisation domestique (10) étant configurable soit par l'émetteur-récepteur sans fil (18), soit par le module de communication de type NFC (16) dont il est pourvu, en écrivant une ou plusieurs tables stockées dans l'unité de mémoire (15), dans lequel ladite ou lesdites tables stockées dans l'unité de mémoire (15) de chacun desdits dispositifs d'automatisation domestique (10) contient une liste des autres dispositifs d'automatisation domestique (10) du système d'automatisation domestique connectés dans le réseau de type maillé et leurs données respectives, lesdites données comprenant les relations entre chacun desdits dispositifs d'automatisation domestique (10), et dans lequel ladite ou lesdites tables stockées dans l'unité de mémoire (15) de chacun desdits dispositifs d'automatisation domestique (10) contient des instructions et des paramètres chargés en tant que séquences d'octets d'instructions et d'octets de paramètres compacts et connectés dynamiquement, dans lequel un premier bit dans chacun desdits octets est agencé pour distinguer les octets d'instructions des octets de paramètres, et dans lequel un second bit dans chacun desdits octets est agencé pour indiquer si lesdits octets sont ou non suivis, dans les séquences respectives, par un octet de paramètres.

2. - Système d'automatisation domestique selon la revendication 1, dans lequel le module d'automatisation (12) de chacun desdits dispositifs d'automatisation domestique (10) consiste en un capteur ou une commande ou un actionneur.

3. - Système d'automatisation domestique selon l'une quelconque des revendications précédentes, dans lequel l'émetteur-récepteur (18) de chacun desdits dispositifs d'automatisation domestique (10) est un module RF ou un module Wi-Fi.

4. - Système d'automatisation domestique selon l'une quelconque des revendications précédentes, dans lequel le module de communication de type NFC (16) de chacun desdits dispositifs d'automatisation domestique (10) comprend un module de communication sans fil (16a) qui intègre une antenne ou est connecté à celle-ci et comprend une mémoire tampon NFC (16b), qui peut être lue et/ou écrite par un dispositif externe qui est de façon similaire équipé d'un module de communication de type NFC.

5. - Système d'automatisation domestique selon la revendication 4, dans lequel l'antenne du module de communication sans fil (16a) de chacun desdits dispositifs d'automatisation domestique (10) est située à proximité de la face orientée vers l'extérieur du dispositif d'automatisation domestique (10), lorsque le dispositif d'automatisation domestique (10) est installé, de telle sorte que le dispositif externe muni d'un module de communication de type NFC puisse être amené à proximité de l'antenne afin de configurer le dispositif d'automatisation domestique (10).

6. - Système d'automatisation domestique selon la revendication 4 ou 5, dans lequel le module d'automatisation (12) de chacun desdits dispositifs d'automatisation domestique (10) est configuré pour vérifier périodiquement si une instruction de mise à jour de données, activée par ledit dispositif externe, est ou non présente dans la mémoire tampon NFC (16b) et, lorsqu'une instruction de mise à jour de données est présente, pour l'interpréter, pour mettre à jour l'unité de mémoire (15), pour ajuster la modalité de fonctionnement du dispositif d'automatisation domestique (10) parmi ceux prévus et pour compiler un tampon de retour prévu dans le module de communication de type NFC, contenant des informations sur les opérations effectuées, de façon que ledit dispositif externe puisse lire de telles informations.

7. - Procédé de configuration de dispositifs d'automatisation domestique (10) d'un système d'automatisation domestique (100) selon l'une quelconque des revendications 1 à 6, comprenant les étapes consistant à :
- lors de la fabrication d'un dispositif d'automatisation domestique (10) du système d'automatisation domestique, téléverser des paramètres de démarrage, tant fonctionnels qu'opérationnels, et des instructions dans la ou les tables stockées dans l'unité de mémoire (15), lesdits paramètres et lesdites instructions comprenant des séquences d'octets d'instructions et d'octets de paramètres connectés dynamiquement, un premier bit dans chacun desdits octets étant agencé pour distinguer les octets d'instructions des octets de paramètres, et un second bit dans chacun desdits octets étant agencé pour indiquer si lesdits octets sont ou non suivis, dans les séquences respectives, par un octet de paramètres ;
- activer par un utilisateur au moins trois dispositifs d'automatisation domestique (10) du système d'automatisation domestique ;
- établir un réseau de type maillé avec les dispositifs (10) qui deviennent interconnectés dès qu'ils sont activés, sans qu'il ne soit nécessaire de les programmer et sans l'intervention d'un opérateur, par interaction conformément aux modalités contenues dans la ou les tables,
dans lequel ladite ou lesdites tables stockées dans l'unité de mémoire (15) de chacun desdits dispositifs d'automatisation domestique (10) contiennent une liste de tous les dispositifs d'automatisation domestique (10) du système d'automatisation domestique connectés dans le réseau de type maillé et leurs données respectives, lesdites données comprenant les relations entre chacun desdits dispositifs d'automatisation domestique (10).

8. - Procédé selon la revendication 7, dans lequel l'étape consistant à :
- établir un réseau de type maillé avec les dispositifs (10) qui deviennent interconnectés dès qu'ils sont activés, sans qu'il ne soit nécessaire de les programmer et sans l'intervention d'un opérateur,
est remplacée par l'étape consistant à :
- connecter un dispositif d'automatisation domestique (10) au moyen des paramètres de démarrage téléversés dans la ou les tables, à un réseau de type maillé déjà existant d'un système d'automatisation domestique selon l'une quelconque des revendications 1 à 6.

9. - Procédé selon la revendication 7 ou 8, comprenant en outre l'étape consistant à :
- modifier au niveau de l'utilisateur les données contenues dans la ou les tables stockées dans l'unité de mémoire (15) d'un dispositif d'automatisation domestique (10) du système d'automatisation domestique selon l'une quelconque des revendications 1 à 6, sans nécessiter l'intervention d'un opérateur qualifié, en utilisant un dispositif doté d'un module NFC.

10. - Procédé selon la revendication 9, comprenant en outre l'étape de vérification et de reconstruction des tables stockées dans l'unité de mémoire (15) des autres dispositifs d'automatisation domestique (10) connectés au réseau de type maillé du système d'automatisation domestique, lorsque les données contenues dans la ou les tables stockées dans l'unité de mémoire (15) d'un dispositif d'automatisation domestique (10) ont été modifiées.

11. - Procédé selon la revendication 9 ou 10, dans lequel le module NFC contenu dans un dispositif externe au dispositif d'automatisation domestique (10) est mis en communication avec le module de communication sans fil (16a) du dispositif d'automatisation domestique (10) au moyen d'une application "APP" installée sur un téléphone intelligent.

12. - Procédé selon l'une quelconque des revendications 9 à 11, comprenant l'étape de création d'un sous-réseau comprenant une partie des dispositifs (10) associés dans le réseau de type maillé, dans lequel les dispositifs (10) associés dans ledit sous-réseau ont des associations et caractéristiques différentes par rapport aux autres dispositifs (10) qui sont associés dans le réseau de type maillé mais ne sont pas associés dans ledit sous-réseau.
